# FASCICULE DE BREVET EUROPEEN

(11) **EP 1 595 728 B1**
(45) Date de publication et mention de la délivrance du brevet: **28.12.2011**
(21) Numéro de dépôt: 05103898.2
(22) Date de dépôt: 10.05.2005
(51) Int. Cl.: B60J 7/02, B60J 7/043

(54) **Pavillon de véhicule automobile, longeron de galerie, dispositif d'obturation et véhicule correspondants.**
Kraftfahrzeugdach, Seitenleiste eines Dachträgers, Schliesseinrichtung und damit ausgerüstetes Fahrzeug
Vehicle roof panel, side rail of roof rack, closing device and corresponding vehicle

(30) Priorité: 12.05.2004 FR 0405157
(43) Date de publication de la demande: 16.11.2005
(73) Titulaire: Advanced Comfort Systems France SAS - ACS France, 79300 Bressuire (FR)
(72) Inventeur: Fourel, Pascal, 35400, Saint Malo (FR)
(74) Mandataire: Bioret, Ludovic

(56) Documents cités:
- DE-A- 3 903 286
- DE-A- 19 831 133
- DE-C- 4 238 944
- US-A- 5 362 122
- US-A- 5 484 185
- US-B1- 6 338 509
- PATENT ABSTRACTS OF JAPAN vol. 015, no. 354 (M-1155), 6 septembre 1991 (1991-09-06) -& JP 03 139429 A (JOHNAN SEISAKUSHO CO LTD), 13 juin 1991 (1991-06-13)
- PATENT ABSTRACTS OF JAPAN vol. 015, no. 186 (M-1112), 14 mai 1991 (1991-05-14) -& JP 03 045426 A (FUJI HEAVY IND LTD), 27 février 1991 (1991-02-27)

## Description

Le domaine de l'invention est celui des véhicules automobiles. Plus précisément, l'invention concerne les ouvrants mis en oeuvre sur des pavillons de véhicule, par exemple sous la forme de toit ouvrant ou de girafon.

L'invention concerne également les barres de galerie, ou traverses de portage, montées sur de tels pavillons.

Les toits ouvrants sont généralement des ouvertures ménagées sensiblement au-dessus des places avant et/ou des places arrière. De nombreux mécanismes ont été développés, pour permettre l'ouverture de ces toits ouvrants.

Dans les dispositifs les plus simples, l'ouvrant est simplement basculant. Dans les dispositifs plus complexes, il est coulissant, et peut par exemple être déplacé vers l'arrière du véhicule, en venant se placer au-dessus du pavillon, ou à l'intérieur de celui-ci. Le pavillon doit donc être équipé de moyens de guidage adaptés, par exemple sous la forme de rails de guidage.

Ces installations sont relativement complexes, et peuvent induire une épaisseur relativement importante du pavillon. En particulier, elles sont peu adaptées aux pavillons de faible épaisseur, et notamment aux pavillons en verre, ou en matière transparente ou translucide.

Les girafons sont quant à eux des ouvertures ménagées à l'arrière des véhicules, notamment de type utilitaire, pour permettre le passage d'objets de grande taille, par exemple des échelles. Les mêmes inconvénients pouvant se rencontrer pour les toits ouvrants s'appliquent ici.

Par ailleurs, les pavillons de véhicule sont souvent équipés de longerons s'étendant de chaque côté du véhicule, et formant des supports pour des barres de galerie. Celles-ci sont généralement amovibles, et peuvent être montées coulissantes le long des longerons, pour permettre un positionnement adapté à la charge à transporter et le cas échéant un stockage sous une forme d'aileron.

Ces barres de galerie peuvent cependant former un obstacle pour l'ouverture d'un toit ouvrant ou d'un girafon. Par exemple, la présence d'un aileron peut être incompatible avec l'ouverture d'un girafon. Il est donc souvent nécessaire d'ôter les barres de galerie avant de profiter de l'ouverture dans le pavillon.

Cette opération est relativement complexe pour l'utilisateur, puisqu'il faut déverrouiller les barres, généralement des deux côtés du véhicule, puis retirer les barres.

En outre se pose alors un problème de stockage. L'utilisateur peut laisser les barres dans son garage, mais elles ne sont alors pas disponibles s'il en a besoin de façon imprévue. Il peut également les stocker dans le véhicule, mais l'encombrement important est souvent gênant.

Pourtant, laisser les barres sur le véhicule lorsqu'elles ne sont pas utilisées n'est pas souhaitable, pour des raisons de consommation, d'aérodynamisme et de bruit généré.

L'invention a notamment pour objectif de pallier ces inconvénients de l'état de l'art.

Plus précisément, un objectif de l'invention est de fournir une technique permettant de faire cohabiter un dispositif d'obturation d'une ouverture dans un pavillon de véhicule automobile et des barres de galerie, qui soit simple et peu coûteuse à mettre en oeuvre.

Un autre objectif de l'invention est de fournir une telle technique, qui ne nécessite pas d'adaptation importante du véhicule, et qui soit d'un montage aisé.

L'invention a également pour objectif de fournir une telle technique, dans laquelle le dispositif d'obturation peut s'étendre sur une grande largeur (pratiquement toute la largeur du pavillon).

L'invention a également pour objectif de fournir une telle technique, qui soit adaptée aux pavillons en verre ou en matériau similaire.

Encore un autre objectif de l'invention est de fournir une telle technique, qui puisse être mis en oeuvre sous la forme de toit ouvrant, mais également de girafon.

L'invention a également pour objectif de fournir une telle technique, qui permette un rangement efficace et simple des barres de galerie, lorsqu'elles ne sont pas utilisées, sans perturbation du fonctionnement du dispositif d'obturation.

Ces objectifs, ainsi que d'autres qui apparaîtront plus clairement par la suite, sont atteints à l'aide d'un dispositif d'obturation d'une ouverture dans un pavillon de véhicule automobile, comprenant un ouvrant mobile entre une position fermée, dans laquelle il obture ladite ouverture, et au moins une position ouverte libérant au moins partiellement ladite ouverture.

Selon l'invention, ledit ouvrant est guidé en coulissement par au moins deux éléments coulissants se déplaçant chacun dans un rail de guidage formé dans un longeron de barre de galerie solidaire dudit pavillon. Au moins un desdits rails de guidage permet par ailleurs le guidage d'au moins une traverse de portage entre au moins une position de travail et une position de stockage, dans laquelle la ou lesdites traverses de portage sont stockées dans un logement prévu à cet effet, s'étendant sous ou au niveau de la surface extérieure dudit pavillon.

On obtient ainsi une technique particulièrement simple et efficace à mettre en oeuvre, ne nécessitant notamment pas de moyens complexes formés dans le pavillon, pour le guidage du dispositif d'obturation, et les barres de portage peuvent être escamotées rapidement et aisément.

De façon avantageuse, au moins un desdits rails comprend une première portion de rail formée dans un pied dudit longeron, et une seconde portion de rail formée dans la longueur dudit longeron.

Préférentiellement, ladite première portion de rail se prolonge légèrement au-delà de la surface dudit pavillon, par une portion d'extrémité, de façon que, dans ladite position fermée, ledit ouvrant affleure avec ledit pavillon.

Selon un premier mode de réalisation, ladite portion d'extrémité est formée dans ledit pied de longeron. Selon un autre mode de réalisation, ladite portion d'extrémité peut être formée dans ledit pavillon.

De façon avantageuse, ladite portion d'extrémité comprend un logement dudit élément coulissant, en matière plastique.

Avantageusement, ledit ouvrant porte au moins deux éléments coulissants de chaque côté, coulissant chacun dans un pied distinct dudit longeron.

Dans un mode de réalisation préférentiel, le déplacement dudit ouvrant est motorisé. L'ouvrant peut ainsi, par exemple, être entraînés par des moyens (câbles, courroies, vis sans fin, biellettes...) logés à l'intérieur des longerons. Le déplacement peut bien sûr également être manuel.

Selon différentes applications, ledit ouvrant est un girafon ou un toit ouvrant. Il peut bien sûr y avoir plusieurs ouvrants selon l'invention sur un même pavillon.

Dans un mode de réalisation particulier de l'invention, ledit ouvrant est réalisé en verre ou en un matériau transparent ou translucide.

L'invention concerne également un longeron de galerie pour véhicule automobile, adapté à la mise en oeuvre d'un dispositif d'obturation tel que décrit ci-dessus. Un tel longeron comprend au moins un rail de guidage destiné à guider :
- au moins un élément coulissant solidaire d'un ouvrant mobile entre une position fermée, dans laquelle il obture une ouverture formée dans le pavillon dudit véhicule, et au moins une position ouverte libérant au moins partiellement ladite ouverture ; et
- au moins une traverse de portage entre au moins une position de travail et une position de stockage, dans laquelle la ou lesdites traverses de portage sont stockées dans un logement prévu à cet effet, s'étendant sous ou au niveau de la surface extérieure dudit pavillon.

L'invention concerne encore un dispositif d'obturation, équipantun pavillon de véhicule automobile tel que décrit ci-dessus.

L'invention concerne également un véhicule automobile, comprenant des moyens tels que décrits ci-dessus. Les moyens de l'invention peuvent être formés sur le pavillon, fourni pré-équipé, ou directement sur la structure du véhicule. Dans ce dernier cas, les caractéristiques décrites dans le cas d'un pavillon s'appliquent directement, sans sortir du cadre de l'invention.

Ces caractéristiques, ainsi que d'autres, apparaîtront plus clairement à la lecture de la description suivante d'un mode de réalisation préférentiel de l'invention, donné à titre d'exemple illustratif et non limitatif, et des figures annexés parmi lesquels :
- la figure 1 illustre un girafon d'un pavillon de véhicule automobile, coopérant avec une barre de toit, ou longeron, selon l'invention ;
- les figures 2A à 2C sont ses vues schématiques présentant respectivement, en coupe :

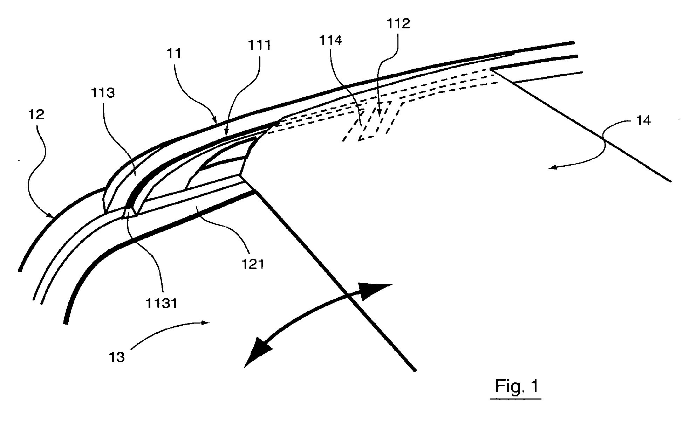

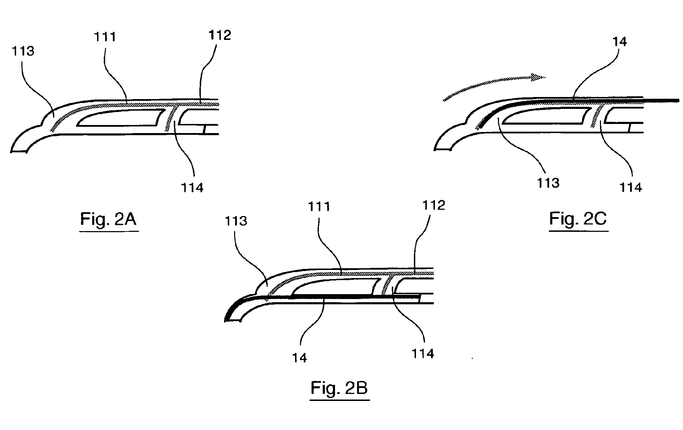

   - figure 2A : les zones de guidage réalisées dans la barre de la figure 1;
   - figure 2B : le girafon en position fermée ;
   - figure 2C : le girafon en position ouverte ;

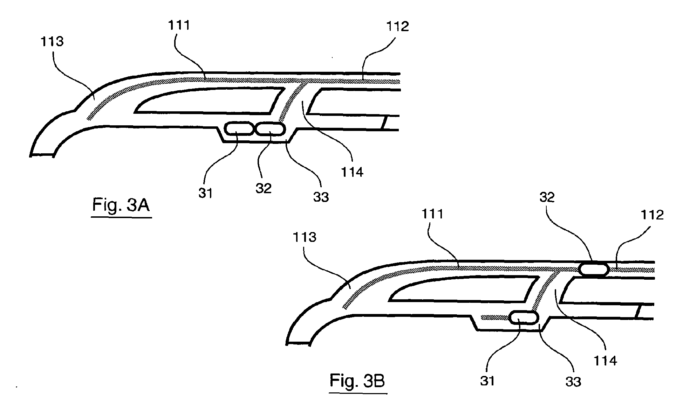

- les figures 3A et 3B illustrent une option de l'invention, prévoyant des traverses de barre de galerie, respectivement :
   - figure 3A : en position stockée ;
   - figure 3B : en cours de déploiement.

Comme indiqué précédemment, l'invention repose sur une approche nouvelle et inventive des pavillons, et notamment du guidage en déplacement d'un girafon ou d'un toit ouvrant, utilisant pour cela les barres de toit ou longerons, et non des moyens de coulissement et/ou de basculement formés sur ou dans le pavillon lui-même, et permettant un escamotage efficace des barres de galerie, ou traverses.

Comme illustré sur la figure 1, le véhicule présente sur son pavillon deux barres de toit 11 longitudinales, ou longerons. Ces barres peuvent être prévues pour recevoir optionnellement des traverses, permettant le transport de divers objets.

Les barres de toit 11 sont montées sur la caisse 12 du véhicule. Dans d'autres modes de réalisation, elles peuvent également être montées sur le pavillon lui-même, en particulier sur un pavillon en verre, qui peut être livré au constructeur tout équipé.

Le véhicule présente une ouverture 13, définie à l'arrière du véhicule, par exemple pour permettre le passage d'objets encombrants comme une échelle. Cette ouverture peut être obturée par un ouvrant 14, également appelé girafon.

Selon l'invention, ce girafon 14 peut prendre une position fermée (illustrée schématiquement par la figure 2C), dans laquelle il se trouve affleurant avec le pavillon et la caisse 12, et une position ouverte (illustrée schématiquement par la figure 2C et la figure 1.

Dans la position fermée, le girafon 14 est avantageusement en appui sur des rebords 121 dans la caisse 12, ou solidarisé à celle-ci. Pour passer de la position fermée à la position ouverture, et réciproquement, le girafon 14 est guidé en coulissement, par exemple par l'intermédiaire de doigts (non représentés) se déplaçant dans des coulisses 111, 112, réalisées dans les barres de toit 11.

Dans le mode de réalisation illustré sur la figure 1, on a prévu deux zones de guidage, associées à deux doigts formés sur le girafon 14. Ces deux zones apparaissent plus clairement sur la figure 2A. Elles débutent respectivement dans les pieds 113 et 114 de la barre de toit, puis se prolongent dans la longueur de la barre de toit. Cette seconde partie peut d'ailleurs être commune aux deux doigts, au moins en partie.

Selon cette approche, le girafon reste en permanence sensiblement parallèle à sa position fermée. Bien entendu, d'autres configurations des zones de coulisse 111 et 112 peuvent être envisagées, permettant de faire louvoyer le girafon, ou de l'ouvrir par basculement (soit dans un premier temps, soit dans une position fixe prédéterminée).

Selon un autre mode de réalisation, le pied 113 peut être suffisamment large pour assurer le guidage de deux (ou plus) doigts de coulissement.

De façon que le girafon 14 soit parfaitement affleurant en position fermée, les zones de coulisse doivent bien sûr pénétrer légèrement dans le pavillon, ou la caisse. On a ainsi prévu un logement 1131, à l'intérieur du pied 113. Ce logement peut être défini directement dans le pied de la barre de toit, ou formé dans la caisse. Avantageusement, il forme un logement permettant de maintenir efficacement le doigt de coulissement correspondant. Ce logement est par exemple réalisé en matière plastique.

L'actionnement du girafon peut être manuel, ou motorisé. Dans ce dernier cas, il est par exemple entraîné par des câbles, qui peuvent circuler à l'intérieur des barres de toit 11.

D'autres formes de zones de guidage peuvent bien sûr être prévues, pour assurer des cinématiques différentes et/ou multiples. On peut ainsi prévoir des zones de guidage permettant d'assurer un basculement, et non plus un coulissement. Le déplacement peut également être décomposé (débuter par un basculement se poursuivre par un coulissement). Des mouvements plus complexes, et/ou combinés, peuvent être envisagés.

Ces variantes seront également adaptées au type d'ouvrant. On a en effet présenté plus haut un girafon, mais l'on comprend que l'invention s'applique également à des toits ouvrants. De tels toits ouvrants peuvent être formés d'un seul panneau, comme présenté plus haut, ou de plusieurs panneaux mobiles, dont les déplacements peuvent le cas échéant être indépendants.

Par ailleurs, l'approche de l'invention permet également de mettre en oeuvre de façon simple et efficace des traverses de toit. En effet, celles-ci sont généralement prévues pour être fixées aux longerons, et sont retirées pour être stockées en dehors du véhicule lorsqu'elles ne sont pas utilisées. Ceci est peu pratique, et nécessite de disposer d'un emplacement de stockage externe.

En outre, la présence des barres en position de travail, ou dans une position de type aileron, peut empêcher l'ouverture du toit ouvrant ou du girafon.

Comme illustré sur les figures 3A et 3B, on prévoit des traverses 31, 32 qui peuvent coulisser dans au moins une des zones de coulisse 111, 112. Dans certains modes de réalisation, ces traverses peuvent être mises en oeuvre en l'absence d'ouvrant tel que décrit plus haut.

Dans une première position, illustré par la figure 3A, elles sont stockées dans un logement 33 prévu à cet effet dans le pavillon, par exemple sous le girafon (lorsqu'il est fermé). Ainsi, lorsque les barres de galerie ne sont pas utilisées, elles peuvent être rangées dans le logement 33 de façon très simple et rapide, par coulissement vers le logement 33.

Les barres de galerie ne sont plus apparentes, ce qui résout les problèmes d'aérodynamisme, de consommation et de vol, sans nécessiter de démontage ni de stockage des barres de galerie.

Dans une deuxième position (figure 3B), elles sont déplacées le long de la zone de coulisse 112, pour prendre une position permettant le portage. Cette position peut être prédéfinie dans la zone de coulisse, ou être quelconque, au choix de l'utilisateur. Des moyens de verrouillage adéquats, non représentés, permettent de maintenir la traverse dans une position stable.

Cette technique est particulièrement simple, puisqu'on exploite, au moins en partie, les mêmes rails pour les traverses et l'ouvrant.

Le déplacement des traverses peut être manuel ou motorisé. La motorisation peut reprendre une partie des moyens utilisés pour le girafon.

## Revendications

1. Pavillon de véhicule automobile comprenant au moins un dispositif d'obturation d'une ouverture (13) définie dans ledit pavillon de véhicule automobile, ledit au moins un dispositif d'obturation comprenant un ouvrant (14) mobile entre une position fermée, dans laquelle il obture ladite ouverture (13), et au moins une position ouverte libérant au moins partiellement ladite ouverture (13),
**caractérisé en ce que** ledit ouvrant (14) est guidé en coulissement par au moins deux éléments coulissants se déplaçant chacun dans un rail de guidage (111, 112) formé dans un longeron (11) de barre de galerie solidaire dudit pavillon,
et **en ce qu'**au moins un desdits rails de guidage (111, 112) permet le guidage d'au moins une barre de galerie (31, 32) entre au moins une position de travail et une position de stockage, dans laquelle la ou lesdites barres de galerie (31, 32) sont stockées dans un logement (33) prévu à cet effet, s'étendant sous ou au niveau de la surface extérieure dudit pavillon.

2. Pavillon selon la revendication 1, **caractérisé en ce qu'**au moins un desdits rails (111, 112) comprend une première portion de rail formée dans un pied (113, 114) dudit longeron (11), et une seconde portion de rail formée dans la longueur dudit longeron (11).

3. Pavillon selon la revendication 2, **caractérisé en ce que** ladite première portion de rail se prolonge légèrement au-delà de la surface dudit pavillon, par une portion d'extrémité, de façon que, dans ladite position fermée, ledit ouvrant (14) affleure avec ledit pavillon.

4. Pavillon selon la revendication 3, **caractérisé en ce que** ladite portion d'extrémité est formée dans ledit pied de longeron (113, 114).

5. Pavillon selon la revendication 3, **caractérisé en ce que** ladite portion d'extrémité est formée dans ledit pavillon.

6. Pavillon selon l'une quelconque des revendications 3 à 5, **caractérisé en ce que** ladite portion d'extrémité comprend un logement (1131) dudit élément coulissant, en matière plastique.

7. Pavillon selon l'une quelconque des revendications 1 à 6, **caractérisé en ce que** ledit ouvrant (14) porte au moins deux éléments coulissants de chaque côté, coulissant chacun dans un pied (113, 114) distinct dudit longeron (11).

8. Pavillon selon l'une quelconque des revendications 1 à 7, **caractérisé en ce que** le déplacement dudit ouvrant (14) est motorisé.

9. Pavillon selon l'une quelconque des revendications 1 à 8, **caractérisé en ce que** ledit ouvrant (14) est un girafon ou un toit ouvrant.

10. Pavillon selon l'une quelconque des revendications 1 à 9, **caractérisé en ce que** ledit ouvrant (14) est réalisé en verre ou en un matériau transparent ou translucide.

11. Longeron de galerie pour véhicule automobile, **caractérisé en ce qu'**il comprend au moins un rail de guidage (111, 112) destiné à guider:
- au moins un élément coulissant solidaire d'un ouvrant mobile (14) entre une position fermée, dans laquelle il obture une ouverture (13) formée dans le pavillon dudit véhicule, et au moins une position ouverte libérant au moins partiellement ladite ouverture (13) ; et
- au moins une barre de galerie (31, 32) entre au moins une position de travail et une position de stockage, dans laquelle la ou lesdites barres de galerie (31, 32) sont stockées dans un logement (33) prévu à cet effet, s'étendant sous ou au niveau de la surface extérieure dudit pavillon.

12. Dispositif d'obturation d'une ouverture (13) dans un pavillon de véhicule automobile, comprenant un ouvrant (14) mobile entre une position fermée, dans laquelle il obture ladite ouverture (13), et au moins une position ouverte libérant au moins partiellement ladite ouverture (13),
**caractérisé en ce que** ledit ouvrant (14) est guidé en coulissement par au moins deux éléments coulissants se déplaçant chacun dans un rail de guidage (111, 112) formé dans un longeron (11) de barre de galerie solidaire dudit pavillon,
au moins un desdits rails de guidage (111, 112) permettant le guidage d'au moins une barre de galerie (31, 32) entre au moins une position de travail et une position de stockage, dans laquelle la ou lesdites barres de galerie (31, 32) sont stockées dans un logement (33) prévu à cet effet, s'étendant sous ou au niveau de la surface extérieure dudit pavillon.

13. Véhicule automobile comprenant au moins un dispositif d'obturation d'une ouverture (13) définie dans le pavillon dudit véhicule automobile, ledit au moins un dispositif d'obturation comprenant un ouvrant (14) mobile entre une position fermée, dans laquelle il obture ladite ouverture (13), et au moins une position ouverte libérant au moins partiellement ladite ouverture (13),
**caractérisé en ce que** ledit ouvrant (14) est guidé en coulissement par au moins deux éléments coulissants se déplaçant chacun dans un rail de guidage (111,112) formé dans un longeron (11) de barre de galerie solidaire dudit pavillon,
et **en ce qu'**au moins un desdits rails de guidage (111, 112) permet le guidage d'au moins une barre de galerie (31, 32) entre au moins une position de travail et une position de stockage, dans laquelle la ou lesdites barres de galerie (31, 32) sont stockées dans un logement (33) prévu à cet effet, s'étendant sous ou au niveau de la surface extérieure dudit pavillon.

## Claims

1. Motor vehicle roof comprising at least one device for closing an opening (13) defined in the motor vehicle roof, the at least one closure device comprising an opening member (14) which can be moved between a closed position in which it closes the opening (13) and at least one open position which at least partially releases the opening (13),
**characterised in that** the opening member (14) is guided in terms of sliding by at least two sliding elements which each move in a guide rail (111, 112) which is formed in a side rail (11) of a roof rack bar which is fixedly joined to the roof,
and **in that** at least one of the guide rails (111, 112) allows at least one roof rack bar (31, 32) to be guided between at least one operating position and a storage position, in which the roof rack bar(s) (31, 32) is/are stored in a housing (33) which is provided for this purpose and which extends below or in the region of the outer surface of the roof.

2. Roof according to claim 1, **characterised in that** at least one of the rails (111, 112) comprises a first rail portion which is formed in a foot (113, 114) of the side rail (11), and a second rail portion which is formed in the length of the side rail (11).

3. Roof according to claim 2, **characterised in that** the first rail portion extends slightly beyond the surface of the roof, via an end portion so that, in the closed position, the opening member (14) is flush with the roof.

4. Roof according to claim 3, **characterised in that** the end portion is formed in the foot (113, 114) of the side rail.

5. Roof according to claim 3, **characterised in that** the end portion is formed in the roof.

6. Roof according to any one of claims 3 to 5, **characterised in that** the end portion comprises a housing (1131) of plastics material for the sliding element.

7. Roof according to any one of claims 1 to 6, **characterised in that** the opening member (14) carries at least two sliding elements at each side, each sliding in a separate foot (113, 114) of the side rail (11).

8. Roof according to any one of claims 1 to 7, **characterised in that** the movement of the opening member (14) is motorised.

9. Roof according to any one of claims 1 to 8, **characterised in that** the opening member (14) is a hatch or an opening roof.

10. Roof according to any one of claims 1 to 9, **characterised in that** the opening member (14) is produced from glass or from a transparent or translucent material.

11. Roof rack side rail for a motor vehicle, **characterised in that** it comprises at least one guide rail (111, 112) which is intended to guide:
- at least one sliding element which is fixedly joined to a movable opening member (14) between a closed position in which it closes an opening (13) formed in the roof of the vehicle, and at least one open position which at least partially releases the opening (13); and
- at least one roof rack bar (31, 32) between at least one operating position and a storage position in which the roof rack bar(s) (31, 32) are stored in a housing (33) which is provided for this purpose and which extends below or in the region of the outer surface of the roof.

12. Device for closing an opening (13) in a motor vehicle roof, comprising an opening member (14) which can be moved between a closed position, in which it closes the opening (13) and at least one open position which at least partially releases the opening (13),
**characterised in that** the opening member (14) is guided in terms of sliding by at least two sliding elements which each move in a guide rail (111, 112) which is formed in a side rail (11) of a roof rack bar which is fixedly joined to the roof,
at least one of the guide rails (111, 112) allowing at least one roof rack bar (31, 32) to be guided between at least one operating position and a storage position, in which the roof rack bar(s) (31, 32) is/are stored in a housing (33) which is provided for this purpose and which extends below or in the region of the outer surface of the roof.

13. Motor vehicle comprising at least one device for closing an opening (13) defined in the roof of the motor vehicle, the at least one closure device comprising an opening member (14) which can be moved between a closed position, in which it closes the opening (13) and at least one open position which at least partially releases the opening (13),
**characterised in that** the opening member (14) is guided in terms of sliding by at least two sliding elements which each move in a guide rail (111, 112) which is formed in a side rail (11) of a roof rack bar which is fixedly joined to the roof,
and **in that** at least one of the guide rails (111, 112) allows at least one roof rack bar (31, 32) to be guided between at least one operating position and a storage position, in which the roof rack bar(s) (31, 32) is/are stored in a housing (33) which is provided for this purpose and which extends below or in the region of the outer surface of the roof.

## Patentansprüche

1. Dach eines Kraftfahrzeugs, das wenigstens eine Vorrichtung zum Abdecken einer Öffnung (13) in dem Dach des Kraftfahrzeugs umfasst, wobei die wenigstens eine Vorrichtung zum Abdecken ein Schiebedachelement aufweist, das zwischen einer geschlossenen Stellung, in der es die Öffnung abdeckt (13) und mindestens einer geöffneten Stellung, in der es zumindest teilweise die Öffnung (13) freigibt, verfahrbar ist, **dadurch gekennzeichnet, dass** das Schiebedachelement (14) durch mindestens zwei Gleitelemente gleitend geführt ist, die jeweils in einer Führungsschiene (111, 112), die in einem Längsträger (11) eines Dachträgers, der mit dem Dach des Kraftfahrzeuges verbunden ist, ausgebildet ist und wobei mindestens eine der Führungsschienen (111, 112) das Führen eines Dachträgers (31, 32) zwischen mindestens einer Arbeitsposition und einer Lagerungsposition ermöglicht, wobei der bzw. die Dachträger (31, 32) in einer dafür vorgesehenen Aufnahme (33) gelagert werden, die sich unterhalb oder in der Ebene der äußeren Dachfläche erstreckt.

2. Dach gemäß Anspruch 1, **dadurch gekennzeichnet, dass** wenigstens eine der Führungsschienen (111, 112) einen ersten Schienenteil, der in einem Fuß (113, 114) des Längsträgers (11) angeordnet ist und einen zweiten Schienenteil umfaßt, der in der Längserstreckung des Längsträgers (11) angeordnet ist.

3. Dach gemäß Anspruch 2, **dadurch gekennzeichnet, dass** der erste Schienenteil sich im Endbereich leicht über die Oberfläche des Daches hinaus erstreckt, so dass das Schiebedachelement in geschlossener Stellung mit dem Dach bündig abschließt.

4. Dach gemäß Anspruch 3, **dadurch gekennzeichnet, dass** der Endbereich in dem Fuß des Längsträgers (113, 114) ausgebildet ist.

5. Dach gemäß Anspruch 3, **dadurch gekennzeichnet, dass** der Endbereich in dem Glasdach ausgebildet ist.

6. Dach gemäß einem der Ansprüche 3 bis 5, **dadurch gekennzeichnet, dass** der Endbereich eine Aufnahme aus Kunststoff für das Gleitelement (1131) aufweist.

7. Dach gemäß einem der Ansprüche 1 bis 6, **dadurch gekennzeichnet, dass** das Schiebedachelement (14) auf jeder Seite mindestens zwei Gleitelemente trägt, die jeweils in einem unterschiedlichen Fuß (113, 114) des Längsträgers (11) gleiten.

8. Dach gemäß einem der Ansprüche 1 bis 7, **dadurch gekennzeichnet, dass** ein Antrieb für das Verschieben des Schiebedachelementes (14) vorgesehen ist.

9. Dach gemäß einem der Ansprüche 1 bis 8, **dadurch gekennzeichnet, dass** das Schiebedachelement (14) ein Schiebedach im hinteren Fahrzeugbereich oder ein Schiebedach ist.

10. Dach gemäß einem der Ansprüche 1 bis 9, **dadurch gekennzeichnet, dass** das Schiebedachelement (14) aus Glas oder aus einem durchsichtigen oder lichtdurchlässigen Material besteht.

11. Längsträger eines Dachträgers für ein Kraftfahrzeug, **dadurch gekennzeichnet, dass** er wenigstens eine Führungsschiene (111, 112) zum Führen von :
• wenigstens einem Gleitelement, das mit einem zwischen einer geschlossenen Stellung, in der es eine Öffnung (13) in dem Dach des Fahrzeuges abdeckt und wenigstens einer geöffneten Stellung, in der die Öffnung (13) zumindest teilweise freigegeben ist, verfahrbaren Schiebedachelement (14) verbunden ist ; und
• mindestens einem Dachträger (31, 32), der zwischen mindestens einer Arbeitsposition und einer Lagerposition, in der der bzw. die Dachträger (31, 32) in einer dafür vorgesehenen Aufnahme (33) gelagert werden, verfahrbar ist, wobei die Aufnahme sich unterhalb oder in der Ebene der äußeren Dachfläche erstreckt.

12. Vorrichtung zum Abdecken einer Öffnung (13) in einem Dach eines Kraftfahrzeugs, umfassend ein Schiebdachelement (14), das zwischen einer geschlossenen Stellung, in der es die Öffnung (13) verschließt und einer offenen Stellung, in der es die Öffnung (13) zumindest teilweise freigibt, verfahrbar ist, **dadurch gekennzeichnet, dass** das Schiebedachelement (14) von wenigstens zwei Gleitelementen, die jeweils in einer Führungsschiene (111, 112) laufen, die in einem mit dem Dach verbundenen Längsträger (11) eines Dachträgers ausgebildet ist, gleitend geführt ist, wobei mindestens eine der Führungsschienen (111, 112) das Führen mindestens eines Dachträgers (31, 32) zwischen mindestens einer Arbeitsposition und einer Lagerposition, in der der bzw. die Dachträger (31, 32) in einer dafür vorgesehenen Aufnahme (33) gelagert werden, erlaubt, wobei die Aufnahme sich unterhalb oder in der Ebene der äußeren Dachfläche erstreckt.

13. Kraftfahrzeug umfassend mindestens ein Vorrichtung zum Abdecken einer Öffnung (13) in dem Dach des Kraftfahrzeuges umfasst, wobei die Vorrichtung zum Abdecken ein Schiebedachelement (14) umfasst, das zwischen einer geschlossenen Position, in der es die Öffnung (13) verschließt und einer offenen Position, in der es die Öffnuhng (13) zumindest teilweise freigibt, verfahrbar ist, **dadurch gekennzeichnet, dass** das Schiebedachelement (14) durch mindestens zwei Gleitelemente, die jeweils in einer Führungsschiene (111, 112) laufen, welche in dem Längsträger (11) eines mit dem Dach verbundenen Dachträgers verbunden ist, gleitend geführt ist und dass mindestens eine der Führungsschienen (111, 112) das Führen mindestens eines Dachträgers (31, 32) zwischen mindestens einer Arbeitsposition und einer Lagerposition, in der der bzw. die Dachträger (31, 32) in einer dafür vorgesehenen Aufnahme (33) gelagert werden, erlaubt, wobei die Aufnahme sich unterhalb oder in der Ebene der äußeren Dachfläche erstreckt.
